# EUROPEAN PATENT APPLICATION

(11) **EP 2 149 806 A1**
(43) Date of publication of application: **03.02.2010**
(21) Application number: 08752564.8
(22) Date of filing: 09.05.2008
(51) Int. Cl.: G02B 6/38

(54) **OPTICAL CONNECTOR AND METHOD FOR ASSEMBLING THE SAME**

(30) Priority: 23.05.2007 JP 2007137199
(71) Applicant: Sumitomo Electric Industries, Ltd., Chuo-ku Osaka-shi Osaka 541-0041 (JP); Nippon Telegraph and Telephone Corporation, Chiyoda-ku Tokyo 100-8116 (JP)
(72) Inventor: OHTSUKA, Kenichiro, Yokohama-shi Kanagawa 244-8588 (JP); OHMURA, Masaki, Yokohama-shi Kanagawa 244-8588 (JP); HAMADA, Masahiro, Yokohama-shi Kanagawa 244-8588 (JP); KIHARA, Mitsuru, Musashino-shi Tokyo 180-8585 (JP); SON, Hitoshi, Musashino-shi Tokyo 180-8585 (JP)
(74) Representative: Wiedemann, Peter
(86) International application number: PCT/JP2008/058681
(87) International publication number: WO 2008/143039

(57) **Abstract**

It is an object to obtain an optical connector capable of executing an assembling work safely and easily without causing a problem, for example, a breakage of an end face of a short optical fiber provided in a ferrule when assembling a site optical fiber, and a method of assembling the optical connector.

In an optical connector having a ferrule 3 including a short optical fiber 12 and a positioning mechanism 5 for placing and fixing an optical fiber 14 to be connected to the short optical fiber 12 in a predetermined position, an end face of the short optical fiber 12 and that of the optical fiber 14 are matched with each other through an almost sheet-like protecting member 17 for transmitting a light in a predetermined refractive index and the optical fiber 14 is positioned by an application of an elastic force to the short optical fiber 12 side.

## Description

### TECHNICAL FIELD

The present invention relates to an optical connector and a method of assembling the same.

### BACKGROUND ART

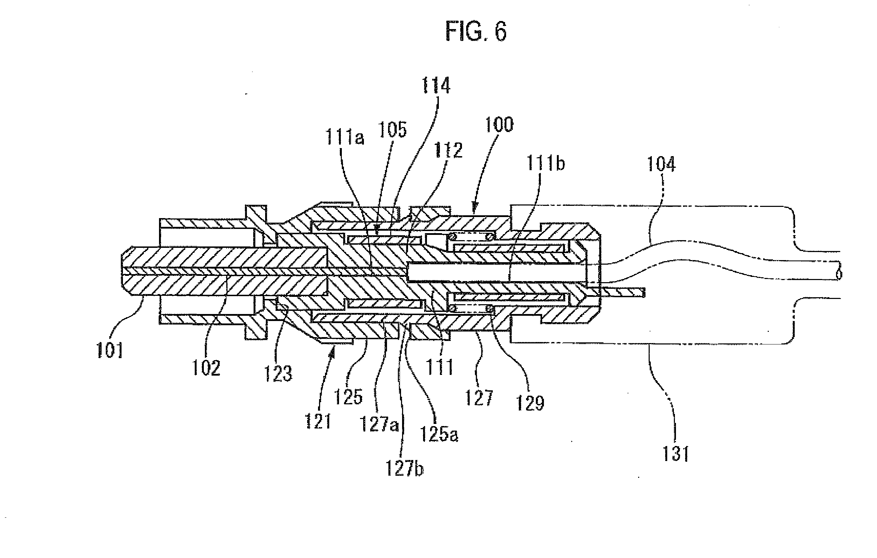

As an optical connector capable of easing a work for attaching the optical connector to an optical fiber on a spot at a working site and shortening a time required for the work, an optical connector shown in Fig. 6 has been developed.

An optical connector 100 shown herein has been disclosed in the hollowing Patent Document 1 and serves to match a site optical fiber 104 maintained in a coated state with an end of a short optical fiber 102 provided in a ferrule 101 and to thus couple them to a rear end of the ferrule 101, and furthermore, to interpose and fix the site optical fiber 104 by means of a positioning mechanism 105 covering a periphery of a matched part.

The positioning mechanism 105 is a so-called splice member and includes a base member 111 provided with V grooves 111a and 111b for positioning the respective optical fibers 102 and 104 in such a manner that a center of the coated optical fiber 104 is coincident with that of the short optical fiber 102, a cover member 112 superposed on the base member 111 to press each of the optical fibers 102 and 104 against each of the V grooves 111a and 111b, and a clamp member 114 for energizing the base member 111 and the cover member 112 in bonding direction.

A wedge is inserted in a joining surface of both the base member 111 and the cover member 112 and can be thus opened against an energizing force of the clamp member 114, and the optical fiber 104 is inserted in the V groove 111b and the wedge is then pulled out so that the optical fiber 104 is interposed and positioned between the base member 111 and the cover member 112 by the energizing force of the clamp member 114, which is not shown.

A plug housing 121 is put on and attached to the positioning mechanism 105.
The plug housing 121 is constituted by a front housing 125 having a step-like positioning portion 123 for positioning front end portions of the base member 111 and the cover member 112 which form the positioning mechanism 105 through a collision, and a rear housing 127 which accommodates the positioning mechanism 105 from a rear end side thereof and is thus coupled to a rear end of the front housing 125.

The rear housing 127 is coupled to and integrated with the front housing 125 by engaging an engaging projection 127b of an engaging portion 127a extended forward with an engaging portion 125a provided on the front housing 125.
The rear housing 127 includes a spring member 129 for energizing the positioning mechanism 105 forward to elastically position the front end portions of the base member 111 and the cover member 112 in an abutting state on the positioning portion 123 of the front housing 125.

A boot 131 for protecting the optical fiber 104 extended from the positioning mechanism 105 is put on and attached to a rear part of the rear housing 127. Moreover, a connector knob for offering an appearance is put on and attached to an outer periphery of the plug housing 121, which is not shown.

In the optical connector 100, the positioning mechanism 105 and the ferrule 101 are elastically supported by the spring member 129 accommodated in the rear housing 127. In a connection to a partner optical connector, therefore, the ferrule 101 abutting on the partner optical connector can be moved backward by an elastic force to relieve a shock.

In the optical connector 100, moreover, it is possible to finish a connector assembling work by simply matching the site optical fiber 104 with the end of the short optical fiber 102 in the positioning mechanism 105 without peeling the coating. In the assembling work on the site, therefore, peeling of the coating of the site optical fiber 104 to expose a core wire, and furthermore, a time and labor for cleaning the exposed core wire are not required. Consequently, it is possible to simplify a processing on the site, thereby enhancing a workability.

Patent Document 1 : Japanese Laid-Open Patent Publication No. 2005-345753

### DISCLOSURE OF THE INVENTION

### PROBLEMS THAI THE INVENTION IS TO SOLVE

In case of the optical connector 100, however, the end face of the short optical fiber 102 provided in the ferrule 101 directly collides with the end face of the site optical fiber 104 in the positioning mechanism 105. Therefore, there is a possibility that a problem might be caused, for example, the end face of the short optical fiber 102 might be broken depending on a colliding state in an insertion of the site optical fiber 104 into the positioning mechanism 105.

It is an object of the invention to solve the problem and to provide an optical connector capable of connecting a site optical fiber safely and easily and enhancing a workability without causing a problem such as a breakage of an end face of a short optical fiber when assembling the site optical fiber, and a method of assembling the optical connector.

### MEANS FOR SOILING THE PROBLEMS

(1) In order to solve the problem, an optical connector according to the invention, is an optical connector having a ferrule including a short optical fiber and a positioning mechanism provided behind the ferrule, and serving to place and fix an optical fiber to be connected to the short optical fiber in a predetermined position,
wherein an end face of the short optical fiber and an end face of the optical fiber are matched with each other through a protecting member for transmitting a light in a predetermined refractive index and the optical fiber is positioned on the short optical fiber side with an elastic force,

According to the above structure, the tip surface of the site optical fiber is matched with the end face of the short optical fiber provided in the ferrule through the protecting member when the site optical fiber is to be assembled. Therefore, the end face of the optical fiber and that of the short optical fiber do not directly collide with each other so that a shock in the matching operation is relieved by the protecting ember. Consequently, there is not a problem, for example, a breakage of the end face of the short optical fiber.
Accordingly, it is possible to connect the site optical fiber to the short optical fiber provided in the ferrule safely and easily, thereby enhancing an assembling workability on the site.

(2) In the optical connector, the protecting member may have a refractive index which is equal to a refractive index of a core of the optical fiber.
Consequently, it is possible to reduce a light transmission loss as greatly as possible, and furthermore, to obtain a high return loss.

(3) In the optical connector, the protecting member may take a shape of a sheet having a thickness of 5 to 30 µm.
By setting the film thickness of the protecting member to be small, thus, it is possible to reduce the light transmission loss as greatly as possible.

(4) In the optical connector, a flexure space for accommodating the optical fiber in a flexing state may be provided between a portion for fixing the optical fiber in the positioning mechanism and the protecting member provided on a rear end of the short optical fiber.
Consequently, it is possible to obtain a state in which the tip of the site optical fiber abuts on the protecting member by a predetermined elastic force through a simple insertion of the optical fiber to generate a flexure in the flexure space. Accordingly, it is possible to maintain a stable connecting state in which the tip surface of the optical fiber always abuts on the protecting member even if the optical connector having a different coefficient of linear expansion from that of the optical fiber is extended in an axial direction depending on an ambient environment,

(5) In the optical connector, the ferrule and the positioning mechanism may be fabricated by integral molding.
Consequently, it is possible to reduce the number of the components constituting the optical connector, thereby promoting an enhancement in an assembling property and a reduction in a cost.

(6) A method of assembling an optical connector according to the invention is a method of assembling the optical connector according to any of claims 1 to 5, wherein an end of an optical fiber is subjected to a cut processing, the optical fiber subjected to the cut processing is inserted through a positioning mechanism coupled to a rear end of the ferrule, and the optical fiber is fixed by the positioning mechanism in a state in which a tip of the optical fiber is caused to come in elastic contact with a protecting member stuck to an end face of the short optical fiber.
Thus, the site optical fiber is inserted through the ferrule by simply cutting the end without peeling the coating. Consequently, it is possible to save a time and labor required for peeling the coating, thereby easing a work for assembling a connector on the site.

### ADVANTAGE OF THE INVENTION

According to the optical connector and the method of assembling the optical connector in accordance with the invention, the tip surface of the site optical fiber is matched with the end face of the short optical fiber provided in the ferrule through the protecting member when the site optical fiber is to be assembled. Therefore, the end face of the optical fiber and that of the short optical fiber do not directly collide with each other so that a shock in the matching operation is relieved by the protecting member. Consequently, there is not a problem, for example, a breakage of the end face of the short optical fiber which is caused by the shock in the matching operation.

### BRIEF DESCRIPTION OF THE DRAWINGS

Fig. 1 is an exploded perspective view showing a schematic structure according to an embodiment of the optical connector in accordance with the invention.
Fig. 2 is a cross-sectional view showing the optical connector illustrated in Fig 1, (a) is a view showing a state that a positioning mechanism is opened, and (b) is a view showing a state that the positioning mechanism is closed.
Fig. 3 is a longitudinal sectional view showing a connector plug assembly illustrated in Fig. 1,
Fig. 4 is an enlarged view showing an A portion in Fig. 3.
Fig. 5 is an explanatory view showing a procedure for a method of assembling a site optical fiber into the optical connector illustrated in Fig.1.
Fig. 6 is a longitudinal sectional view showing a structure according to a prior art optical connector.

### EXPLANATION OF DESIGNATIONS

1 ··· optical connector, 3 ··· ferrule, 5 ··· positioning mechanism, 7 ··· lug housing, 9 ··· connector knob, 11 ··· boot, 14 ··· optical fiber, 15 ··· fiber inserting hole, 17 ··· protecting member, 17a ··· external surface, 21 ··· base member, 21a ··· V groove, 22 ··· cover member, 24 ··· clamp member, 33 ··· front housing, 33a ··· engaging portion, 35 ··· rear housing, 35a ··· engaging portion, 35b ··· engaging projection, 37 ··· spring member, 41 ··· flexure space, 43 ··· flexure.

### BEST MODE FOR CARRYING OUT THE INVENTION

A suitable embodiment of an optical connector and a method of assembling the optical connector according to the invention will be described below in detail with reference to the drawings.

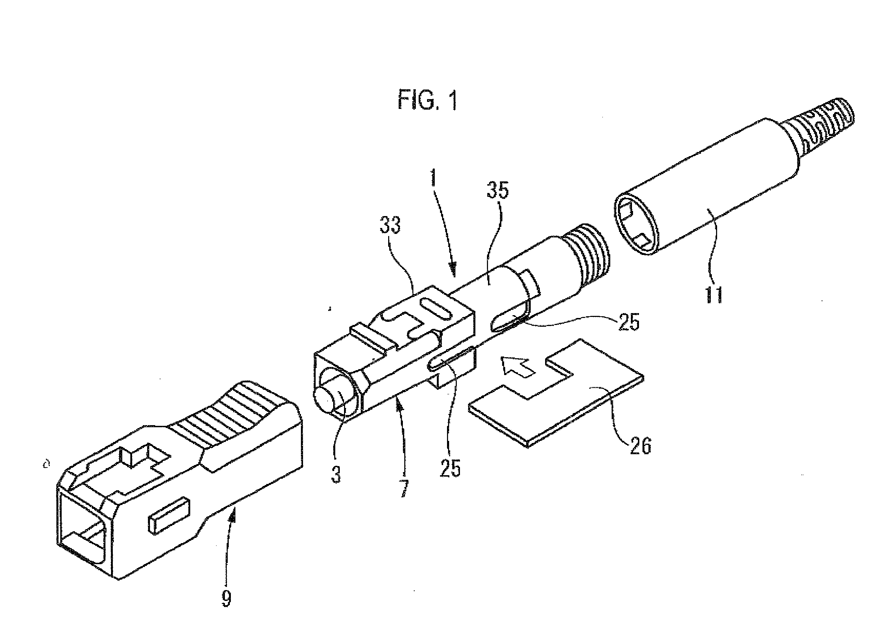

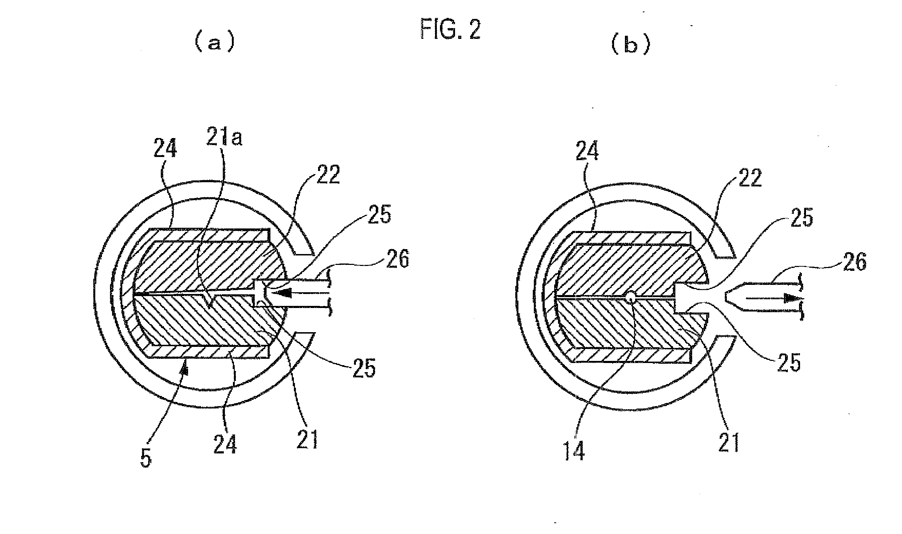

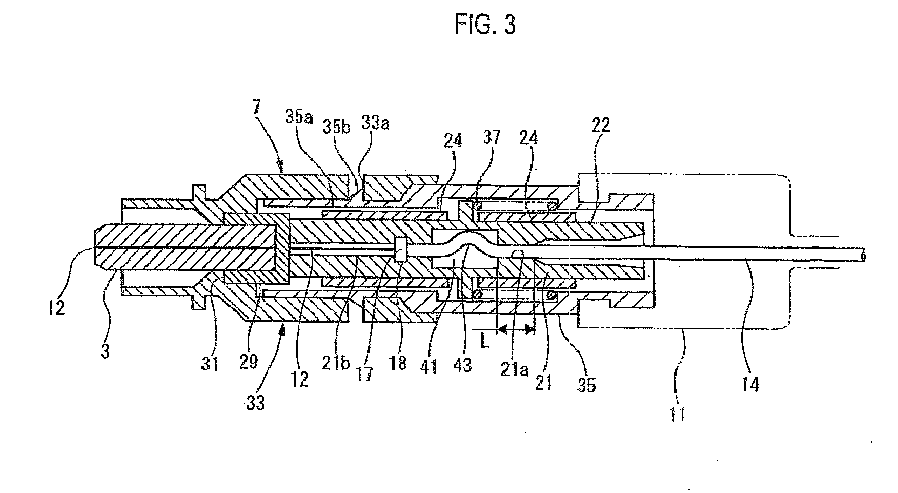

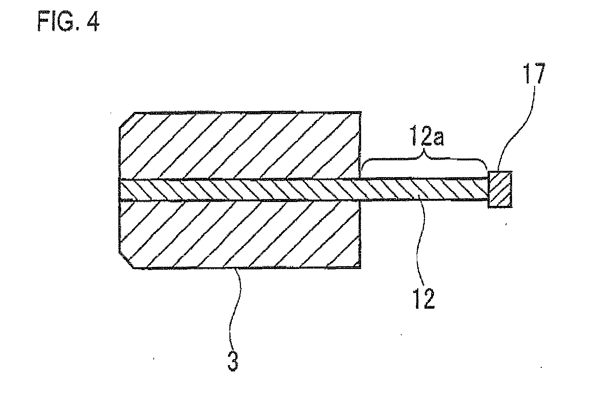

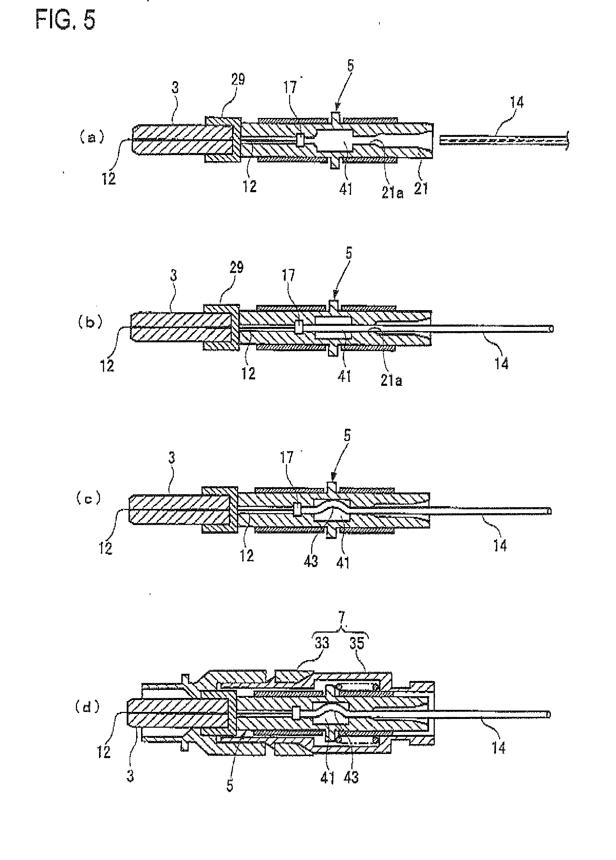

Fig. 1 is an exploded perspective view showing a schematic structure according to an embodiment of the optical connector in accordance with the invention, Fig. 2 is a cross-sectional view showing an operation for opening/closing a positioning mechanism of the optical connector illustrated in Fig. 1 by inserting a wedge, Fig. 3 is a longitudinal sectional view showing a connector plug assembly illustrated in Fig. 1, Fig. 4 is an enlarged view showing an A portion in Fig. 3, and Fig. 5 is an explanatory view showing a procedure for a method of assembling a site optical fiber into the optical connector illustrated in Fig. 1.

An optical connector 1 according to the embodiment is an SC connector to be assembled into a site optical fiber and is constituted by a plug housing 7 for accommodating a ferrule 3 and a positioning mechanism 5 to be coupled to a rear end of the ferrule 3, thereby forming a connector plug assembly, a connector knob 9 put on and attached to the plug housing 7 from a forward part, and a boot 11 put on and attached to a rear end of the plug housing 7 as shown in Figs. 1 to 3.

The ferrule 3 includes a short optical fiber 12 on a central axis thereof as shown in Fig. 4. The short optical fiber 12 is protruded in a certain length rearward from the ferrule 3, and a protruded portion 12a is inserted through an inside of the positioning mechanism 5.

An almost sheet-like protecting member 17 for transmitting a light in a predetermined refractive index is stuck to a rear end face of the short optical fiber 12 to be inserted through the inside of the positioning mechanism 5. The protecting member 17 has a refractive index which is equal to that of a core of a site optical fiber 14 to be connected.
Moreover, the protecting member 17 takes a shape of a sheet having a thickness of 5 to 30 µm, and an adhesive material is properly applied to both surfaces at the short optical fiber 12 side and the optical fiber 14 side to give an adhesiveness for sticking an end face of each of the optical fibers.

The positioning mechanism 5 is a so-called splice member and includes a base member 21 provided with a V groove 21 for positioning the optical fiber 14 in such a manner that a center of the optical fiber 14 having a coating is coincident with that of the short optical fiber 12, a cover member 22 superposed on the base member 21 to press the optical fiber 14 against the V groove 21a, a clamp member 24 for energizing the base member 21 and the cover member 22 in a bonding direction, and a ferrule fitting member 29 for positioning the rear end of the ferrule 3 on a tip of the base member 21 as shown in Fig. 2.

The V groove 21a provided on the base member 21 is formed in a predetermined length L close to a rear end of the base member 21. A range of the thickness L serves as a portion 23 for interposing the optical fiber 14 in cooperation with the cover member 22 and thus fixing the optical fiber 14.
A built-in fiber inserting groove 21b (see Fig. 3) for inserting the short optical fiber 12 therethrough is formed on a front end side of the base member 21 from the portion 23 for fixing the optical fiber 14 in such a manner that a central axis is coincident with the optical fiber 14 in the V groove 21a. A positioning groove 18 for positioning the protecting member 17 stuck to the rear end of the short optical fiber 12 is formed on a terminal of the built-in fiber inserting groove 21b.

The base member 21 and the cover member 22 in the positioning mechanism 5 can be opened against an energizing force of the clamp member 24 through an insertion of a wedge 26 into a wedge inserting portion 25 formed on a joining surface of both of them as shown in Fig. 2(a), and the short optical fiber 12 and the optical fiber 14 are inserted into the V groove 21a and the built-in fiber inserting groove 21b and the wedge 26 is then pulled out as shown in Fig. 2(b) so that the optical fiber 14 is interposed and positioned between the base member 21 and the cover member 22 by the energizing force of the clamp member 24.

As shown in Fig. 3, a flexure space 41 for causing the optical fiber 14 to have an elastic force toward the protecting member 17 side by accommodating the optical fiber 14 in a flexing state is provided between the portion 23 of the positioning mechanism 5 which fixes the optical fiber 14 and the protecting member 17 provided at the rear end of the short optical fiber 12.
In the embodiment, the flexure space 41 is formed by hollowing an intermediate portion between the base member 21 and the cover member 22 which form the positioning mechanism 5.

The optical fiber 14 inserted through the V groove 21a of the positioning mechanism 5 is interposed and fixed by the positioning mechanism 5 after an amount of the insertion of the optical fiber 14 into the positioning mechanism 5 is regulated to generate a flexure 43 in the flexure space 41. Thus, a. tip surface of the optical fiber 14 which is positioned is maintained in an abutting state on the protecting member 17 provided on the rear end of the short optical fiber 12 with an elastic force,

The plug housing 7 is constituted by a front housing 33 having a step-like positioning portion 31 for positioning, through a collision, the ferrule fitting member 29 provided on the front ends of the base member 21 and the cover member 22 which form the positioning mechanism 5, and a rear housing 35 which accommodates the positioning mechanism 5 from a rear end side thereof and is thus coupled to a rear end of the front housing 33.

As shown in Fig. 3, the rear housing 35 is coupled to and integrated with the front housing 33 by engaging an engaging projection 35b of an engaging portion 35a extended forward with an engaging portion 33a provided on the front housing 33,
The rear housing 35 includes a spring member 37 for energizing the positioning mechanism 35 forward to elastically position the front end portions of the base member 21 and the cover member 22 through the ferrule fitting member 29 in an abutting state on the positioning portion 31 of the front housing 33.

The boot 11 put on and attached to the rear part of the rear housing 35 covers a periphery of the optical fiber 14 extended from the positioning mechanism 5 and protects the optical fiber 14 to prevent bending from being suddenly applied to the optical fiber 14.

In the optical connector 1 described above, the positioning mechanism 5 and the ferrule 3 are elastically supported movably in a rearward direction by means of the spring member 37 accommodated in the rear housing 35. In a connection to a partner optical connector, therefore, the ferrule 3 abutting on the partner optical connector can be moved rearward by an elastic force to relieve a shock,

Next, description will be given to a method of assembling the connector according to the invention.
The optical connector 1 is assembled in a procedure shown in Figs. 5(a) to 5(d).
First of all, as shown in Fig. 5(a), the positioning mechanism 5 coupled to the rear end of the ferrule 3 is prepared in a state in which it is opened by the insertion of the wedge 26, and the end of the site optical fiber 14 is subjected to a cut processing. As shown in Fig. 5(b), subsequently, the optical fiber 14 subjected to the cut processing is inserted through the V groove 21a of the positioning mechanism 5 and the tip of the optical fiber 14 is thus caused to abut on the protecting member 17, As shown in Fig. 5(c), next, the amount of the insertion of the optical fiber 14 is regulated in such a manner that the optical fiber 14 having the tip abutting on the protecting member 17 generates the flexure 43 in a proper amount within the flexure space 41, and the wedge 26 is then pulled out of the positioning mechanism 5. Consequently, the optical fiber 14 inserted in the ferrule 3 is fixed by the positioning mechanism 5 with the tip coming in elastic contact with the protecting member 17. As shown in Fig. 5(d), thereafter, the front housing 33 and the rear housing 35 in the plug housing 7 are put on and attached to the positioning mechanism 5. Furthermore, the boot 11 is attached to the rear end of the plug housing 7 and the connector knob 9 is attached to the outer periphery of the plug housing 7, which is not shown. Thus, the optical connector 1 is completely assembled.

In the optical connector 1 according to the embodiment described above, the site optical fiber 14 is subjected to an end face processing and is then inserted through the positioning mechanism 5 until the end face abuts on the protecting member 17 with an elastic force, and furthermore, the optical fiber 14 is caused to have a flexure in the flexure space 41 and is thereafter positioned and fixed by the positioning mechanism 5. Thus, the assembly is completed.
In other words, the tip surface of the site optical fiber 14 is matched with the end face of the short optical fiber 12 provided in the ferrule 3 through the protecting member 17. Therefore, the end face of the optical fiber 14 is prevented from directly colliding with that of the short optical fiber 12 and a shock in the matching operation is relieved by the protecting member 17. Consequently, there is not a problem, for example, a breakage of the end face of the short optical fiber 12 which is caused by the shock in the matching operation.
Accordingly, it is possible to connect the site optical fiber 14 to the short optical fiber 12 provided in the ferrule 3 safely and easily. Thus, it is possible to enhance an assembling workability on the site,

Moreover, the protecting member 17 has an adhesiveness given to both surfaces thereof as described in the embodiment, Consequently, it is possible to produce an advantage for preventing a mutual shaft misalignment of the optical fibers which are matched. Thus, it is possible to contain a connection having no shaft misalignment with high precision for a long period of time.

In the optical connector 1 according to the embodiment, moreover, the protecting member 17 has a refractive index which is equal to that of the core of the site optical fiber 14.
Therefore, it is possible to reduce a light transmission loss as greatly as possible and to obtain a high return loss.

In the optical connector 1 according to the embodiment, furthermore, the protecting member 17 takes a shape of a sheet having a thickness of 5 to 30 µm. By setting the film thickness of the protecting member 17 to be small, thus, it is possible to reduce the light transmission loss as greatly as possible.

In the optical connector 1 according to the embodiment, moreover, the flexure space 41 for accommodating the optical fiber 14 in a flexing state to cause the optical fiber 14 to have an elastic force turned toward the protecting member 17 side is provided between the portion 23 for fixing the optical fiber 14 in the positioning mechanism 5 and the protecting member 17 provided on the rear end of the short optical fiber 12.
By simply inserting the site optical fiber 14 to generate the flexure in the flexure space 41, therefore, it is possible to obtain a state in which the tip of the inserted optical fiber 14 abuts on the protecting member 17 by a predetermined elastic force. Thus, it is possible to maintain a stable connecting state in which the tip surface of the optical fiber 14 always abuts on the protecting member 17.

As shown in Fig. 5, furthermore, the end of the site optical fiber 14 is subjected to the cut processing, the optical fiber 14 subjected to the cut processing is exactly inserted through the positioning mechanism 5 coupled to the rear end of` the ferrule 3 without the coating peeled and the tip of the optical fiber 14 is caused to come in elastic contact with the protecting member 17 stuck to the end face of the short optical fiber 12, and the optical fiber 14 is fixed by the positioning mechanism 5 in this state. Consequently, it is possible to bring a state in which the optical connector 1 is assembled into the optical fiber 14,
In other words, referring to the assembling method according to the embodiment by simply cutting the end of the site optical fiber 4 without peeling the coating and thus inserting the site optical fiber 14 through the ferrule 3, it is possible to save a time and labor required for peeling the coating, thereby easing the connector assembling work on the site.
The optical connector 1 according to the embodiment is also suitable for the case in which the coating of the site optical fiber 14 is peeled to expose a core wire.

In the optical connector 1 according to the embodiment, the ferrule 3 and the positioning mechanism 5 are separate members.
However, it is also possible to employ a structure in which the ferrule 3 and the positioning mechanism 5 are fabricated by integral molding.
With the integral structure, thus, it is possible to reduce the number of the components constituting the optical connector 1, thereby promoting an enhancement in an assembling property and a reduction in a cost.

Although the invention has been described in detail with reference to the specific embodiment, it is apparent to the skilled in the art that various changes and modifications can be made without departing from the spirit and scope of the invention. The application is based on Japanese Patent Application (JP-A-2007-137199) filed on May 23, 2007 and contents thereof are incorporated herein by reference.

## Claims

1. An optical connector having a ferrule including a short optical fiber and a positioning mechanism provided behind the ferrule and serving to place and fix an optical fiber to be connected to the short optical fiber in a predetermined position,
wherein an end face of the short optical fiber and an end face of the optical fiber are matched with each other through a protecting member for transmitting a light in a predetermined refractive index and the optical fiber is positioned on the short optical fiber side with an elastic force.

2. The optical connector according to claim 1, wherein the protecting member has a refractive index which is equal to a refractive index of a core of the optical fiber.

3. The optical connector according to claim 1 or 2, wherein the protecting member takes a shape of a sheet having a thickness of 5 to 30 µm

4. The optical connector according to any of claims 1 to 3, wherein a flexure space for accommodating the optical fiber in a flexing state is provided between a portion for fixing the optical fiber in the positioning mechanism and the protecting member provided on a rear end of the short optical fiber.

5. The optical connector according to any of claims 1 to 4, wherein the ferrule and the positioning mechanism are fabricated by integral molding.

6. A method of assembling the optical connector according to any of claims 1 to 5, wherein an end of an optical fiber is subjected to a cut processing, the optical fiber subjected to the cut processing is inserted through a positioning mechanism coupled to a rear end of the ferrule, and the optical fiber is fixed by the positioning mechanism in a state in which a tip of the optical fiber is caused to come in elastic contact with a protecting member stuck to an end face of the short optical fiber.
